(19)

Europäisches Patentamt

European Patent Office

Office européen des brevets

(11) EP 4 470 877 A1

(12) **EUROPEAN PATENT APPLICATION**
published in accordance with Art. 153(4) EPC

(43) Date of publication:
04.12.2024 Bulletin 2024/49

(51) International Patent Classification (IPC):
B62D 6/00 (2006.01)    B62D 5/04 (2006.01)

(21) Application number: 22923764.9

(52) Cooperative Patent Classification (CPC):
B62D 6/00; B62D 5/04; B62D 6/008; B62D 15/025

(22) Date of filing: 25.01.2022

(86) International application number:
PCT/JP2022/002733

(87) International publication number:
WO 2023/144895 (03.08.2023 Gazette 2023/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: JTEKT Corporation
Kariya-shi, Aichi 448-8652 (JP)

(72) Inventors:
• SHOJI, Naoki
  Kariya-shi, Aichi 448-8652 (JP)
• ITAMOTO, Hidenori
  Kariya-shi, Aichi 448-8652 (JP)

• TAMAIZUMI, Terutaka
  Kariya-shi, Aichi 448-8652 (JP)
• TAMAKI, Hiromasa
  Kariya-shi, Aichi 448-8652 (JP)
• NITTA, Shingo
  Kariya-shi, Aichi 448-8652 (JP)
• ZHOU, Xin
  Kariya-shi, Aichi 448-8652 (JP)
• TSUJII, Shunsuke
  Kariya-shi, Aichi 448-8652 (JP)

(74) Representative: Winter, Brandl - Partnerschaft
mbB
Alois-Steinecker-Straße 22
85354 Freising (DE)

(54) **MOTOR CONTROL DEVICE**

(57) A motor control device includes: a manual steering command value generation unit that generates a manual steering command value; an integrated angle command value calculation unit that calculates an integrated angle command value by adding the manual steering command value to an automatic steering command value provided in a driver assist mode; and a control unit that performs angle control on an electric motor for steering angle control based on the integrated angle command value. The manual steering command value generation unit is configured to generate the manual steering command value based on an equation of motion including road reaction force characteristic coefficients. The motor control device further includes a road reaction force characteristic changing unit that changes a value of at least one of the road reaction force characteristic coefficients included in the equation of motion, based on vehicle environment information that is information on an environment in which a vehicle travels.

FIG. 2

EP 4 470 877 A1

**Description**

TECHNICAL FIELD

The present invention relates to motor control devices that control an electric motor for steering angle control.

BACKGROUND ART

Patent Document 1 below discloses a motor control device including: a manual steering command value calculation unit that calculates a manual steering command value using steering torque; an integrated angle command value calculation unit that calculates an integrated angle command value by adding the manual steering command value to an automatic steering command value; and a control unit that performs angle control on an electric motor based on the integrated angle command value.

The manual steering command value calculation unit of Patent Document 1 calculates the manual steering command value using a reference EPS model. Specifically, the manual steering command value calculation unit calculates the manual steering command value based on an equation of motion including, as coefficients, a spring constant and viscous damping coefficient for giving a virtual reaction force.

Related Art Documents

Patent Documents

Patent Document 1: Japanese Unexamined Patent Application Publication No. 2019-194059 (JP 2019-194059 A)

SUMMARY OF THE INVENTION

Problem to be Solved by the Invention

Even with the motor control device described in Patent Document 1, there is a risk of an accident etc. such as collision and lane departure due to a driver's wrong maneuver etc. when the driver intervenes in steering during driver assistance.

An object of one embodiment of the present invention is to provide a motor control device that can reduce the risk of an accident etc. due to a driver's wrong maneuver etc. when the driver intervenes in steering during driver assistance.

Means for Solving the Problem

An embodiment of the present invention includes: a manual steering command value generation unit that generates a manual steering command value; an integrated angle command value calculation unit that calculates an integrated angle command value by adding the manual steering command value to an automatic steering command value provided in a driver assist mode; and a control unit that performs angle control on an electric motor for steering angle control based on the integrated angle command value. The manual steering command value generation unit is configured to generate the manual steering command value based on an equation of motion including road reaction force characteristic coefficients. The embodiment further includes a road reaction force characteristic changing unit that changes a value of at least one of the road reaction force characteristic coefficients included in the equation of motion, based on vehicle environment information that is information on an environment in which a vehicle travels.

It is therefore possible to reduce the risk of an accident etc. due to a driver's wrong maneuver etc. when the driver intervenes in steering during driver assistance.

The above and other objects, features, and effects of the present invention will become apparent from the following description of an embodiment that will be given with reference to the accompanying drawings.

BRIEF DESCRIPTION OF THE DRAWINGS

[FIG. 1] FIG. 1 is a schematic diagram showing a schematic configuration of an electric power steering system to which a motor control device according to an embodiment of the present invention is applied.
[FIG. 2] FIG. 2 is a block diagram illustrating an electrical configuration of a motor control ECU.

[FIG. 3] FIG. 3 is a block diagram showing the configuration of a manual steering command value generation unit.

[FIG. 4] FIG. 4 is a graph showing an example of setting an assist torque command value $T^*_{m,ad}$ with respect to steering torque $T_{tb}$.

[FIG. 5] FIG. 5 is a schematic diagram showing an example of a reference EPS model that is used in a command value setting unit.

[FIG. 6] FIG. 6 is a block diagram showing the configuration of an angle control unit.

[FIG. 7] FIG. 7 is a schematic diagram showing an example of the configuration of a physical model of the electric power steering system.

[FIG. 8] FIG. 8 is a block diagram showing the configuration of a disturbance torque estimation unit.

[FIG. 9] FIG. 9 is a schematic diagram showing the configuration of a torque control unit.

[FIG. 10] FIG. 10 is a flowchart showing the procedure of a road reaction force characteristic setting process that is performed by a road reaction force characteristic setting unit.

[FIG. 11] FIG. 11 is a graph showing an example of characteristics of $k \cdot \theta^*_{c,md}$ with respect to $\theta^*_{c,md}$ when k is set to $k_L$ and $k_L$ is set to $k_1$, $k_2$, or $k_0$, and an example of characteristics of $k \cdot \theta^*_{c,md}$ with respect to $\theta^*_{c,md}$ when k is set to $k_R$ and $k_R$ is set to $k_1$, $k_2$, or $k_0$.

[FIG. 12] FIG. 12 is a graph showing an example of characteristics of $c \cdot d\theta^*_{c,md}/dt$ with respect to $d\theta^*_{c,md}/dt$ when c is set to $c_L$ and $c_L$ is set to $c_1$, $c_2$, or $c_0$, and an example of characteristics of $c \cdot d\theta^*_{c,md}/dt$ with respect to $d\theta^*_{c,md}/dt$ when c is set to $c_R$ and $c_R$ is set to $c_1$, $c_2$, or $c_0$.

MODES FOR CARRYING OUT THE INVENTION

[Description of Embodiment of Invention]

An embodiment of the present invention includes: a manual steering command value generation unit that generates a manual steering command value; an integrated angle command value calculation unit that calculates an integrated angle command value by adding the manual steering command value to an automatic steering command value provided in a driver assist mode; and a control unit that performs angle control on an electric motor for steering angle control based on the integrated angle command value. The manual steering command value generation unit is configured to generate the manual steering command value based on an equation of motion including road reaction force characteristic coefficients. The embodiment further includes a road reaction force characteristic changing unit that changes a value of at least one of the road reaction force characteristic coefficients included in the equation of motion, based on vehicle environment information that is information on an environment in which a vehicle travels.

With this configuration, it is possible to reduce the risk of an accident etc. due to a driver's wrong maneuver etc. when the driver intervenes in steering during driver assistance.

In the embodiment of the present invention, the road reaction force characteristic coefficients include a spring constant and a viscous damping coefficient, and the road reaction force characteristic changing unit is configured to change a value of either or both of the spring constant and the viscous damping coefficient according to a steering intervention direction or a steering direction based on the vehicle environment information.

In the embodiment of the present invention, the road reaction force characteristic changing unit is configured to increase the value of at least one of the road reaction force characteristic coefficients included in the equation of motion in such a steering intervention direction or a steering direction that the vehicle approaches another vehicle or an obstacle.

In the embodiment of the present invention, the road reaction force characteristic changing unit is configured to reduce the value of at least one of the road reaction force characteristic coefficients included in the equation of motion in such a steering intervention direction or a steering direction that the vehicle moves away from another vehicle or an obstacle.

[Detailed Description of Embodiment of Invention]

An embodiment of the present invention will be described in detail below with reference to the accompanying drawings.

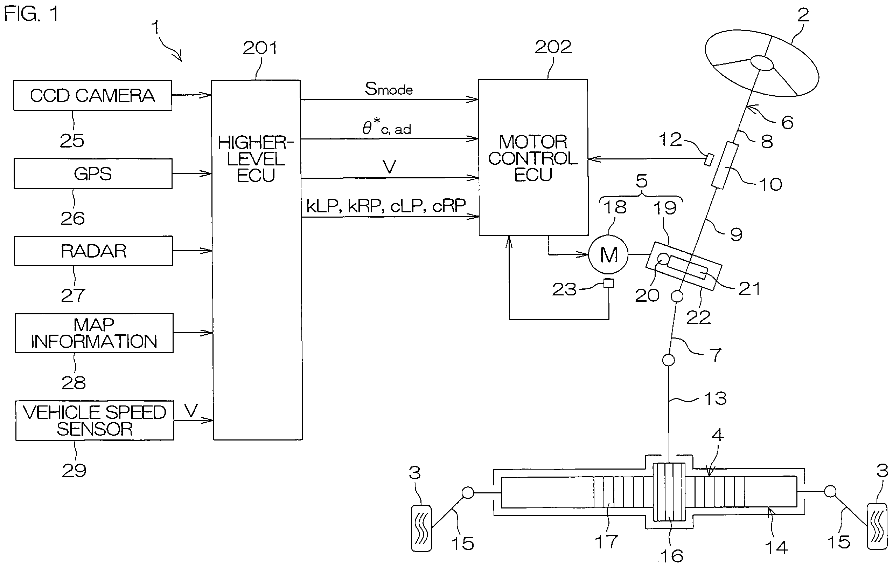

FIG. 1 is a schematic diagram showing a schematic configuration of an electric power steering system to which a motor control device according to an embodiment of the present invention is applied.

An electric power steering system 1 includes: a steering wheel 2 that is a steering member for steering a vehicle; a steering operation mechanism 4 that steers steered wheels 3 with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected so as to be rotatable relative to each other via a torsion bar 10.

A torque sensor 12 is disposed near the torsion bar 10. The torque sensor 12 detects steering torque (torsion bar torque) $T_{tb}$ applied to the steering wheel 2, based on the amount of relative rotational displacement between the input shaft 8 and the output shaft 9. In the present embodiment, for example, the steering torque $T_{tb}$ that is detected by the torque sensor 12 is such that the torque for steering to the left is detected as a positive value and the torque for steering to the right is detected as a negative value. The greater the absolute value of the steering torque $T_{tb}$, the greater the magnitude thereof.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate with steering of the steering wheel 2. A pinion 16 is connected to a distal end of the pinion shaft 13.

The rack shaft 14 extends linearly in a left-right direction of the vehicle. A rack 17 that meshes with the pinion 16 is formed on an intermediate portion in an axial direction of the rack shaft 14. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing. Hereinafter, the reduction ratio (gear ratio) of the speed reducer 19 is sometimes represented by N. The reduction ratio N is defined as the ratio $\theta_{wg}/\theta_{ww}$ of a rotation angle $\theta_{wg}$ of the worm gear 20 to a rotation angle $\theta_{ww}$ of the worm wheel 21.

The worm gear 20 is rotationally driven by the electric motor 18. The worm wheel 21 is connected to the output shaft 9 so as to be rotatable therewith.

When the worm gear 20 is rotationally driven by the electric motor 18, the worm wheel 21 is rotationally driven so that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 by the electric motor 18 allows steering assistance by the electric motor 18 and steering of the steered wheels 3. The electric motor 18 is provided with a rotation angle sensor 23 that detects the rotation angle of a rotor of the electric motor 18.

The torque that is applied to the output shaft 9 (example of an object to be driven by the electric motor 18) includes motor torque from the electric motor 18 and disturbance torque other than the motor torque. The disturbance torque $T_{lc}$ other than the motor torque includes steering torque $T_{tb}$, road reaction torque (road load torque) $T_{rl}$, and friction torque Tf.

The steering torque $T_{tb}$ is torque that is applied from the steering wheel 2 side to the output shaft 9 due to a force that is applied to the steering wheel 2 by the driver (driver torque), a force that is generated by steering inertia, etc.

The road reaction torque $T_{r1}$ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead in the direction of travel of the vehicle, a GPS (Global Positioning System) 26 that detects the location of the vehicle, a radar 27 that detects a road shape and obstacles, a map information memory 28 storing map information, and a vehicle speed sensor 29 that detects a vehicle speed V

The CCD camera 25, the GPS 26, the radar 27, the map information memory 28, and the vehicle speed sensor 29 are connected to a higher-level ECU (ECU: Electronic Control Unit) 201 that performs autonomous driving control. The higher-level ECU 201 performs perception of the surroundings, vehicle self-localization, route planning, etc. based on information obtained by the CCD camera 25, the GPS 26, the radar 27, and the vehicle speed sensor 29 and the map information, and determines control target values for steering and drive actuators.

In the present embodiment, the driving mode includes a normal mode and a driver assist mode. In the driver assist mode, the higher-level ECU 201 sets an automatic steering command value $\theta^*_{c,ad}$ for driver assistance. In the present embodiment, the driver assistance is lane centering assist (LCA) for keeping the vehicle in the center of its lane (lane center). The automatic steering command value $\theta^*_{c,ad}$ is a target value of the steering angle for causing the vehicle to travel along the center of its lane. The automatic steering command value $\theta^*_{c,ad}$ is set based on, for example, the vehicle speed, the lateral deviation of the vehicle from a target travel line, and the yaw deviation of the vehicle from the target travel line. A process of setting such an automatic steering command value $\theta^*_{c,ad}$ is well known, and therefore will not be described in detail herein.

Automatic steering control (driver assist control) may be, for example, lane keeping assist (LKA) control for keeping the vehicle within its lane. In the normal mode, the higher-level ECU 201 sets the automatic steering command value $\theta^*_{c,ad}$ to zero.

In the driver assist mode, the higher-level ECU 201 generates and outputs reaction force control information for the left and right directions according to vehicle environment information that is information on the environment in which the vehicle travels, based on the information obtained by the CCD camera 25, the GPS 26, the radar 27 and the vehicle speed sensor 29 and the map information. In the present embodiment, the reaction force control information for the left and right directions includes four types of variables kLP, kRP, cLP, and cRP. These variables kLP, kRP, cLP, and cRP will be described in detail later.

The higher-level ECU 201 outputs a mode signal $S_{mode}$ indicating whether the driving mode is the normal mode or the autonomous driving mode. The mode signal $S_{mode}$, the automatic steering command value $\theta^*_{c,ad}$, the vehicle speed V, and the reaction force control information for the left and right directions kLP, kRP, cLP, and cRP are provided to a motor control ECU 202 via an in-vehicle network. The steering torque $T_{tb}$ detected by the torque sensor 12 and an output signal from the rotation angle sensor 23 are input to the motor control ECU 202. The motor control ECU 202 controls the electric motor 18 based on these input signals and the information provided by the higher-level ECU 201.

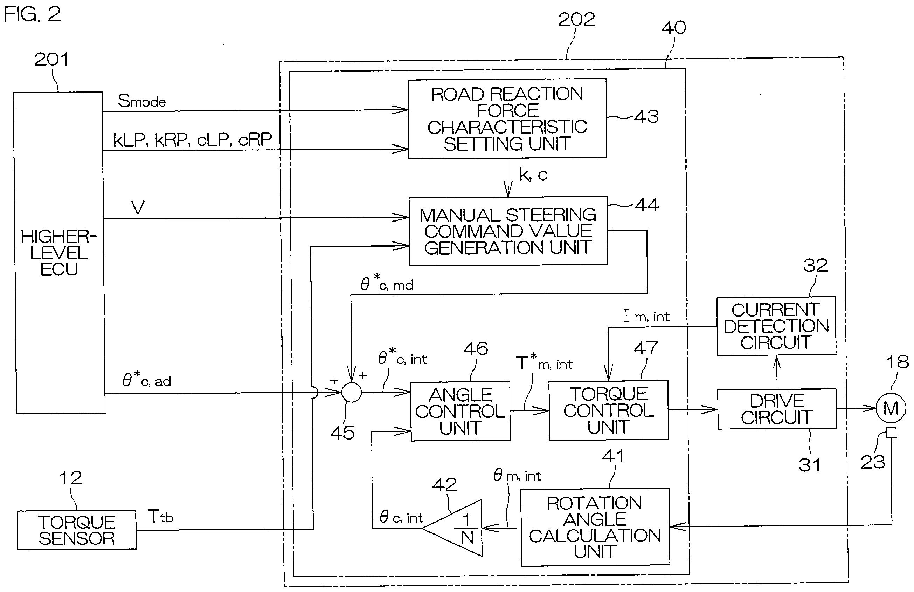

FIG. 2 is a block diagram illustrating an electrical configuration of the motor control ECU 202.

The motor control ECU 202 includes a microcomputer 40, a drive circuit (inverter circuit) 31 that is controlled by the microcomputer 40 and supplies electric power to the electric motor 18, and a current detection circuit 32 that detects a current flowing through the electric motor 18 (hereinafter referred to as "motor current $I_{m,int}$").

The microcomputer 40 includes a CPU and a memory (ROM, RAM, nonvolatile memory, etc.), and functions as a plurality of functional processing units by executing a predetermined program. The plurality of functional processing units includes a rotation angle calculation unit 41, a reduction ratio division unit 42, a road reaction force characteristic setting unit 43, a manual steering command value generation unit 44, an integrated angle command value calculation unit 45, an angle control unit 46, and a torque control unit 47.

The rotation angle calculation unit 41 calculates a rotor rotation angle $\theta_{m,int}$ of the electric motor 18 based on an output signal from the rotation angle sensor 23. The reduction ratio division unit 42 converts the rotor rotation angle $\theta_{m,int}$ into a rotation angle (actual steering angle) $\theta_{c,int}$ of the output shaft 9 by dividing the rotor rotation angle $\theta_{m,int}$ by the reduction ratio N.

The road reaction force characteristic setting unit 43 sets a spring constant k and a viscous damping coefficient c that are to be used by the manual steering command value generation unit 44 in the driver assist mode, based on the reaction force control information for the left and right directions kLP, kRP, cLP, and cRP, etc. provided by the higher-level ECU 201. The operation of the road reaction force characteristic setting unit 43 will be described in detail later.

The manual steering command value generation unit 44 is provided to, when the driver operates the steering wheel 2, set the steering angle according to the steering wheel operation as a manual steering command value $\theta^*_{c,md}$. The manual steering command value generation unit 44 generates the manual steering command value $\theta^*_{c,md}$ using the vehicle speed V and the steering torque $T_{tb}$ detected by the torque sensor 12. The operation of the manual steering command value generation unit 44 will be described in detail later.

The integrated angle command value calculation unit 45 calculates an integrated angle command value $\theta^*_{c,int}$ by adding the manual steering command value $\theta^*_{c,md}$ to the automatic steering command value $\theta^*_{c,ad}$ set by the higher-level ECU 201.

The angle control unit 46 calculates a motor torque command value $T^*_{m,int}$ that is a target value of the motor torque of the electric motor 18, based on the integrated angle command value $\theta^*_{c,int}$. The torque control unit 47 drives the drive circuit 31 so that the motor torque of the electric motor 18 becomes closer to the motor torque command value $T^*_{m,int}$. That is, the control unit composed of the angle control unit 46 and the torque control unit 47 drivingly controls the drive circuit 31 so that the actual steering angle $\theta_{c,int}$ (rotation angle $\theta_{c,int}$ of the output shaft 9) becomes closer to the integrated angle command value $\theta^*_{c,int}$. The operation of the angle control unit 46 and torque control unit 47 will be described in detail later.

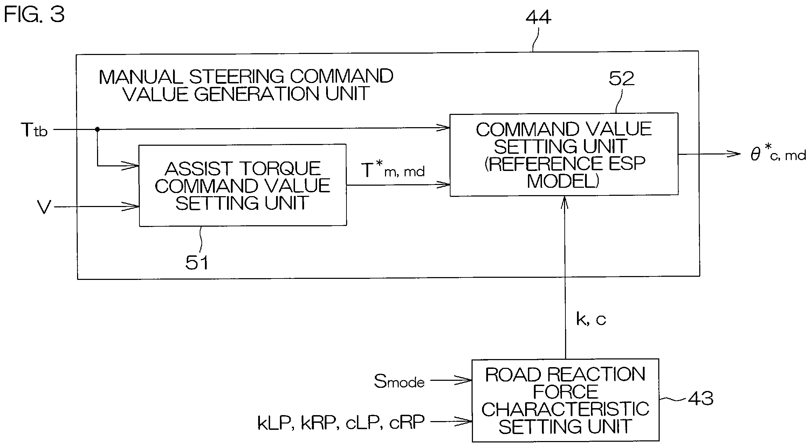

FIG. 3 is a block diagram showing the configuration of the manual steering command value generation unit 44.

The manual steering command value generation unit 44 includes an assist torque command value setting unit 51 and a command value setting unit 52.

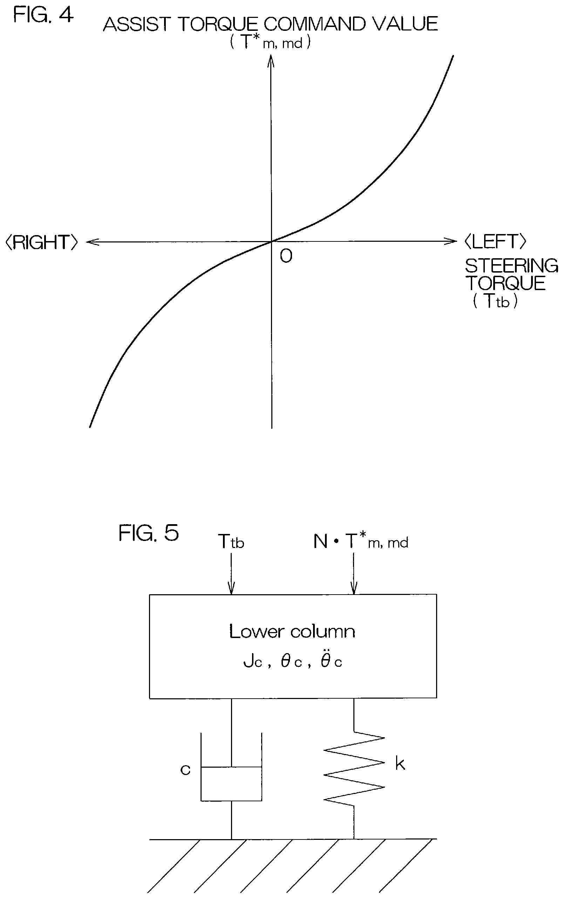

The assist torque command value setting unit 51 sets an assist torque command value $T^*_{m,md}$ that is a target value of the assist torque necessary for a manual operation. The assist torque command value setting unit 51 sets the assist torque command value $T^*_{m,md}$ based on the vehicle speed V and the steering torque $T_{tb}$ detected by the torque sensor 12. An example of setting the assist torque command value $T^*_{m,md}$ with respect to the steering torque $T_{tb}$ is shown in FIG. 4.

The assist torque command value $T^*_{m,md}$ is set to a positive value when the electric motor 18 should generate a steering assist force for steering to the left, and is set to a negative value when the electric motor 18 should generate a steering assist force for steering to the right. The assist torque command value $T^*_{m,md}$ is positive for a positive value of the steering torque $T_{tb}$, and is negative for a negative value of the steering torque $T_{tb}$. The assist torque command value $T^*_{m,md}$ is set so that its absolute value increases as the absolute value of the steering torque $T_{tb}$ increases. The assist torque command value $T^*_{m,md}$ is set so that its absolute value decreases as the vehicle speed V increases.

The assist torque command value setting unit 51 may calculate the assist torque command value $T^*_{m,md}$ by multiplying the steering torque $T_{tb}$ by a preset constant.

In the present embodiment, the command value setting unit 52 sets the manual steering command value $\theta^*_{c,md}$ using a reference EPS model.

FIG. 5 is a schematic diagram showing an example of the reference EPS model that is used in the command value setting unit 52.

This reference EPS model is a single inertia model including a lower column. The lower column corresponds to the output shaft 9 and the worm wheel 21. In FIG. 5, $J_c$ is the inertia of the lower column, $\theta_c$ is the rotation angle of the lower column, and $T_{tb}$ is the steering torque. This reference EPS model is a model for generating (estimating) the rotation angle $\theta_c$ of the lower column when the steering torque $T_{tb}$, an output shaft torque command value $N \cdot T^*_{m,md}$ that is applied from the electric motor 18 to the output shaft 9 based on the assist torque command value $T^*_{m,md}$, and the road reaction torque $T_{r1}$ are provided to the lower column. The road reaction torque $T_{r1}$ is given by the following expression (1) using the spring constant k and the viscous damping coefficient c.

$$T_{rl} = -k \cdot \theta_c - c(d\theta_c/dt) \ ... \ (1)$$

An equation of motion of the reference EPS model is given by the following expression (2).

$$J_c \cdot d^2\theta_c/dt^2 = T_{tb} + N \cdot T^*_{m,md} - k \cdot \theta_c - c(d\theta_c/dt) \ ... \ (2)$$

The values of the spring constant k and viscous damping coefficient c that are the coefficients of the equation of motion given by the expression (2) are set by the road reaction force characteristic setting unit 43. The spring constant k and the viscous damping coefficient c that are the coefficients of the equation of motion given by the expression (2) are an example of the "road reaction force characteristic coefficients" in the present invention.

The command value setting unit 52 calculates the rotation angle $\theta_c$ of the lower column by solving the differential equation given by the expression (2) by substituting the steering torque $T_{tb}$ detected by the torque sensor 12 for $T_{tb}$ and substituting the assist torque command value $T^*_{m,md}$ set by the assist torque command value setting unit 51 for $N \cdot T^*_{m,md}$. The command value setting unit 52 then sets the obtained rotation angle $\theta_c$ of the lower column as the manual steering command value $\theta^*_{c,md}$.

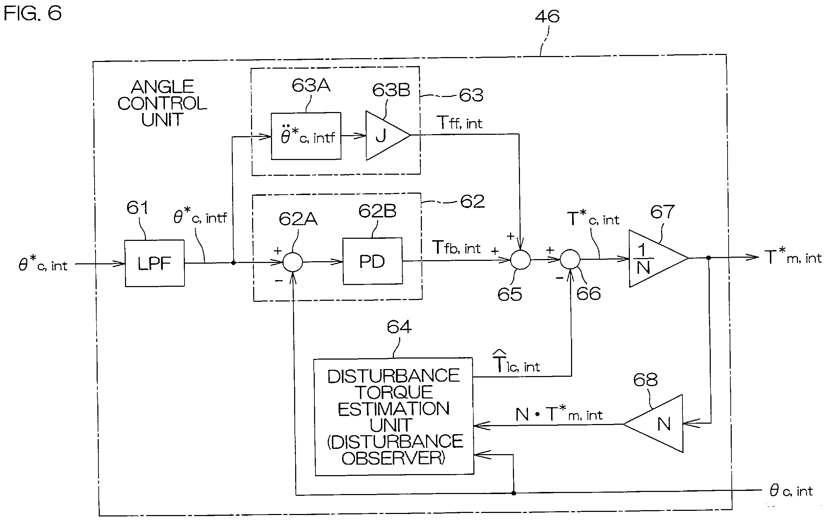

FIG. 6 is a block diagram showing the configuration of the angle control unit 46.

The angle control unit 46 calculates the motor torque command value $T^*_{m,int}$ based on the integrated angle command value $\theta^*_{c,int}$. The angle control unit 46 includes a low-pass filter (LPF) 61, a feedback control unit 62, a feedforward control unit 63, a disturbance torque estimation unit 64, a torque addition unit 65, a disturbance torque compensation unit 66, a reduction ratio division unit 67, and a reduction ratio multiplication unit 68.

The reduction ratio multiplication unit 68 converts the motor torque command value $T^*_{m,int}$ calculated by the reduction ratio division unit 67 into an output shaft torque command value $T^*_{c,int} (= N \cdot T^*_{m,int})$ that acts on the output shaft 9 by multiplying the motor torque command value $T^*_{m,int}$ by the reduction ratio N of the speed reducer 19.

The low-pass filter 61 performs a low-pass filtering process on the integrated angle command value $\theta^*_{c,int}$. An integrated angle command value $\theta^*_{c,intf}$ after the low-pass filtering process is provided to the feedback control unit 62 and the feedforward control unit 63.

The feedback control unit 62 is provided to bring the actual steering angle $\theta_{c,int}$ calculated by the reduction ratio division unit 42 (see FIG. 2) closer to the integrated angle command value $\theta^*_{c,intf}$ after the low-pass filtering process. The feedback control unit 62 includes an angle deviation calculation unit 62A and a PD control unit 62B. The angle deviation calculation unit 62A calculates a deviation $\Delta\theta_{c,int} (= \theta^*_{c,intf} - \theta_{c,int})$ between the integrated angle command value $\theta^*_{c,intf}$ and the actual steering angle $\theta_{c,int}$ calculated by the reduction ratio division unit 42. The angle deviation calculation unit 62A may calculate, as the angle deviation $\Delta\theta_{c,int}$, a deviation $(\theta^*_{c,intf} - {}^\wedge\theta_{c,int})$ between the integrated angle command value $\theta^*_{c,intf}$ and an estimated steering angle value ${}^\wedge\theta_{c,int}$ calculated by the disturbance torque estimation unit 64.

The PD control unit 62B calculates feedback control torque $T_{fb,int}$ by performing PD calculation (proportional-derivative calculation) on the angle deviation $\Delta\theta_{c,int}$ calculated by the angle deviation calculation unit 62A. The feedback control torque $T_{fb,int}$ is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration $d^2\theta^*_{c,intf}/dt^2$ by obtaining the second derivative of the integrated angle command value $\theta^*_{c,intf}$.

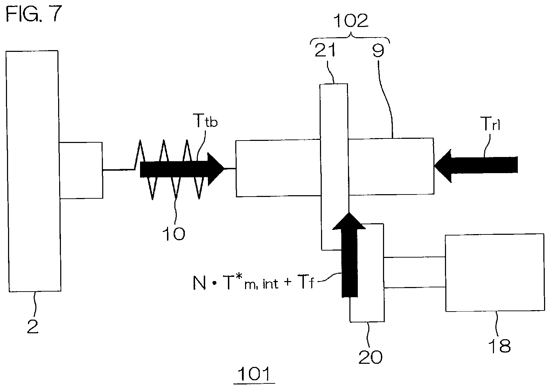

The inertia multiplication unit 63B calculates feedforward control torque $T_{ff,int}$ $(= J \cdot d^2\theta^*_{c,intf}/dt^2)$ by multiplying the target angular acceleration $d^2\theta^*_{c,intf}/dt^2$ calculated by the angular acceleration calculation unit 63A by the inertia J of the electric power steering system 1. The inertia J is obtained from, for example, a physical model of the electric power steering system 1 (see FIG. 7) described later. The feedforward control torque $T_{ff,int}$ is provided to the torque addition unit 65 as an inertia compensation value.

The torque addition unit 65 calculates a basic torque command value $(T_{fb,int} + T_{ff,int})$ by adding the feedforward control torque $T_{ff,int}$ to the feedback control torque $T_{fb,int}$.

The disturbance torque estimation unit 64 is provided to estimate nonlinear torque (disturbance torque: torque other than the motor torque) that is generated as disturbance in a plant (object to be controlled by the electric motor 18). The disturbance torque estimation unit 64 estimates the disturbance torque (disturbance load) $T_{lc}$, the steering angle $\theta_{c,int}$, and a steering angle derivative (angular velocity) $d\theta_{c,int}/dt$ based on the output shaft torque command value $T^*_{c,int}$ $(= N \cdot T^*_{m,int})$ that is an input value to the plant and the actual steering angle $\theta_{c,int}$ that is an output of the plant. The estimated values of the disturbance torque $T_{lc}$, the steering angle $\theta_{c,int}$, and the steering angle derivative (angular velocity) $d\theta_{c,int}/dt$ are represented by $^\wedge T_{lc}$, $^\wedge\theta_{c,int}$, and $d^\wedge\theta_{c,int}/dt$, respectively. The disturbance torque estimation unit 64 will be described in detail later.

The estimated disturbance torque value $^\wedge T_{lc}$ calculated by the disturbance torque estimation unit 64 is provided to the disturbance torque compensation unit 66 as a disturbance torque compensation value.

The disturbance torque compensation unit 66 calculates the output shaft torque command value $T^*_{c,int}$ $(= T_{fb,int} + T_{ff,int} - {}^\wedge T_{lc})$ by subtracting the estimated disturbance torque value $^\wedge T_{lc}$ from the basic torque command value $(T_{fb,int} + T_{ff,int})$. The output shaft torque command value $T^*_{c,int}$ (torque command value for the output shaft 9) after compensation for the disturbance torque is thus obtained.

The output shaft torque command value $T^*_{c,int}$ is provided to the reduction ratio division unit 67. The reduction ratio division unit 67 calculates the motor torque command value $T^*_{m,int}$ by dividing the output shaft torque command value $T^*_{c,int}$ by the reduction ratio N. The motor torque command value $T^*_{m,int}$ is provided to the torque control unit 47 (see FIG. 2).

The disturbance torque estimation unit 64 will be described in detail. The disturbance torque estimation unit 64 is a disturbance observer that estimates the disturbance torque $T_{lc}$, the steering angle $\theta_{c,int}$, and the angular velocity $d\theta_{c,int}/dt$ using, for example, a physical model 101 of the electric power steering system 1 shown in FIG. 7.

The physical model 101 includes a plant (example of an object to be driven by the motor) 102 that includes the output shaft 9 and the worm wheel 21 fixed to the output shaft 9. The steering torque $T_{tb}$ is applied from the steering wheel 2 to the plant 102 via the torsion bar 10, and the road reaction torque $T_{rl}$ is applied from the steered wheel 3 side to the plant 102.

Moreover, the output shaft torque command value $T^*_{c,int}$ $(= N \cdot T^*_{m,int})$ is applied to the plant 102 via the worm gear 20, and the friction torque $T_f$ is applied to the plant 102 due to the friction between the worm wheel 21 and the worm gear 20.

An equation of motion for the inertia of the physical model 101 is given by the following expression (3), where J is the inertia of the plant 102.

[Math 1]

$$J\ddot{\theta}_{c,int} = N \cdot T^*_{m,int} + T_{lc} \quad \cdots (3)$$
$$T_{lc} = T_{tb} + T_{rl} + T_f$$

$d^2\theta_{c,int}/dt^2$ is the angular acceleration of the plant 102. N is the reduction ratio of the speed reducer 19. $T_{lc}$ represents the disturbance torque other than the motor torque that is applied to the plant 102. While the disturbance torque $T_{lc}$ is shown as the sum of the steering torque $T_{tb}$, the road reaction torque $T_{rl}$, and the friction torque $T_f$ in the present embodiment, the disturbance torque $T_{lc}$ actually includes torque other than these.

An equation of state for the physical model 101 in FIG. 7 is given by the following expression (4).

[Math 2]

$$\begin{cases} \dot{x} = Ax + B_1u_1 + B_2u_2 \\ y = Cx + Du_1 \end{cases} \quad \cdots (4)$$

In the above expression (4), x is a state variable vector, $u_1$ is a known input vector, $u_2$ is an unknown input vector, and y is an output vector (measured value). In the above expression (4), A is a system matrix, Bi is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is given by the following expression (5).

[Math 3]

$$\begin{cases} \dot{X}e = AeXe + BeU1 \\ y = CeXe \end{cases} \quad \cdots (5)$$

In the expression (5), $x_e$ is a state variable vector of the extended system, and is given by the following expression (6).

[Math 4]

$$Xe = \begin{bmatrix} x \\ u2 \end{bmatrix} \quad \cdots (6)$$

In the above expression (5), $A_e$ is a system matrix of the extended system, $B_e$ is a known input matrix of the extended system, and $C_e$ is an output matrix of the extended system.

A disturbance observer (extended state observer) given by the equation of the following expression (7) is constructed from the extended equation of state given by the above expression (5).

[Math 5]

$$\begin{cases} \dot{\hat{X}}e = Ae\hat{X}e + BeU1 + L(y - \hat{y}) \\ \hat{y} = Ce\hat{X}e \end{cases} \quad \cdots (7)$$

In the expression (7), $^\wedge x_e$ represents an estimated value of $x_e$. L is an observer gain. $^\wedge y$ represents an estimated value of y. $^\wedge x_e$ is given by the following expression (8).

[Math 6]

$$\hat{X}e = \begin{bmatrix} \hat{\theta}_{c,int} \\ \dot{\hat{\theta}}_{c,int} \\ \hat{T}_{lc} \end{bmatrix} \quad \cdots (8)$$

In the expression (8), $^\wedge\theta_{c,int}$ is an estimated value of $\theta_{c,int}$, and $^\wedge T_{lc}$ is an estimated value of $T_{lc}$.

The disturbance torque estimation unit 64 calculates the state variable vector $^\wedge x_e$ based on the equation of the above expression (7).

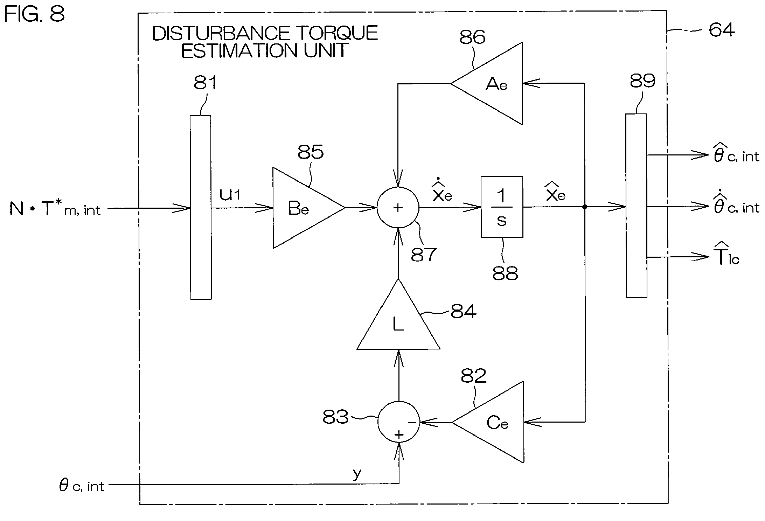

FIG. 8 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $T^*_{c,int}$ ($= N \cdot T^*_{m,int}$) calculated by the reduction ratio multiplication unit 68 (see FIG. 6) is provided to the input vector input unit 81. The input vector input unit 81 outputs the input vector $u_1$.

The output of the integration unit 88 is the state variable vector $^\wedge x_e$ (see the above expression (8)). At the start of the calculation, an initial value is given as the state variable vector $^\wedge x_e$. The initial value of the state variable vector $^\wedge x_e$ is, for example, 0.

The system matrix multiplication unit 86 multiplies the state variable vector $^\wedge x_e$ by the system matrix $A_e$. The output matrix multiplication unit 82 multiplies the state variable vector $^\wedge x_e$ by the output matrix $C_e$.

The first addition unit 83 subtracts the output ($C_e \cdot {}^{\wedge}x_e$) of the output matrix multiplication unit 82 from the output vector (measured value) y that is the actual steering angle $\theta_{c,int}$ calculated by the reduction ratio division unit 42 (see FIG. 2). That is, the first addition unit 83 calculates the difference ($y - {}^{\wedge}y$) between the output vector y and the estimated output vector value ${}^{\wedge}y$ (= $C_e \cdot {}^{\wedge}x_e$). The gain multiplication unit 84 multiplies the output ($y - {}^{\wedge}y$) of the first addition unit 83 by the observer gain L (see the above expression (7)).

The input matrix multiplication unit 85 multiplies the input vector $u_1$ output from the input vector input unit 81 by the input matrix $B_e$. The second addition unit 87 calculates the derivative $d{}^{\wedge}x_e/dt$ of the state variable vector by adding the output ($B_e \cdot u_1$) of the input matrix multiplication unit 85, the output ($A_e \cdot {}^{\wedge}x_e$) of the system matrix multiplication unit 86, and the output ($L(y - {}^{\wedge}y)$) of the gain multiplication unit 84. The integration unit 88 calculates the state variable vector ${}^{\wedge}x_e$ by integrating the output ($d{}^{\wedge}x_e/dt$) of the second addition unit 87. The state variable vector output unit 89 calculates the estimated disturbance torque value ${}^{\wedge}T_{lc}$, the estimated steering angle value ${}^{\wedge}\theta_{c,int}$, and the estimated angular velocity value $d{}^{\wedge}\theta_{c,int}/dt$ based on the state variable vector ${}^{\wedge}x_e$.

Unlike the extended state observer described above, a typical disturbance observer is composed of an inverse model of the plant and a low-pass filter. An equation of motion of the plant is given by the expression (3) as described above. The inverse model of the plant is therefore given by the following expression (9).

[Math 7]

$$ T_{lc} = J \ddot{\theta}_{c,int} - N \cdot T^*_{m,int} \qquad \cdots (9) $$

The inputs to the typical disturbance observer are $J \cdot d^2\theta_{c,int}/dt^2$ and $N \cdot T^*_{m,int}$. Since the second derivative of the actual steering angle $\theta_{c,int}$ is used, noise of the rotation angle sensor 23 has a great influence. On the other hand, the extended state observer of the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

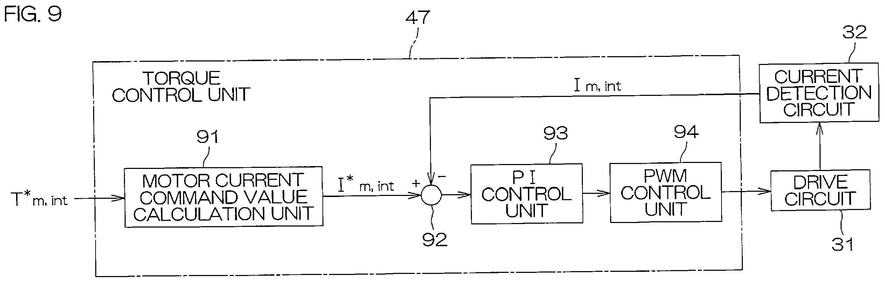

FIG. 9 is a block diagram showing an electrical configuration of the torque control unit 47. The torque control unit 47 includes a motor current command value calculation unit 91, a current deviation calculation unit 92, a PI control unit 93, and a PWM (Pulse Width Modulation) control unit 94.

The motor current command value calculation unit 91 calculates a motor current command value $I^*_{m,int}$ by dividing the motor torque command value $T^*_{m,int}$ calculated by the angle control unit 46 by a torque constant Kt of the electric motor 18.

The current deviation calculation unit 92 calculates a deviation $\Delta I_{m,int}$ (= $I^*_{m,int} - I_{m,int}$) between the motor current command value $I^*_{m,int}$ obtained by the motor current command value calculation unit 91 and the motor current $I_{m,int}$ detected by the current detection circuit 32.

The PI control unit 93 generates a drive command value for controlling the motor current $I_{m,int}$ flowing through the electric motor 18 to the motor current command value $I^*_{m,int}$ by performing PI calculation (proportional-integral calculation) on the current deviation $\Delta I_{m,int}$ calculated by the current deviation calculation unit 92. The PWM control unit 94 generates a PWM control signal with a duty cycle corresponding to the drive command value, and supplies the PWM control signal to the drive circuit 31. Electric power corresponding to the drive command value is thus supplied to the electric motor 18.

Next, the operation of the road reaction force characteristic setting unit 43 will be described. The road reaction force characteristic setting unit 43 performs a road reaction force characteristic setting process for setting the spring constant k and the viscous damping coefficient c that are to be used to calculate the manual steering command value $\theta^*_{c,md}$ in the driver assist mode. The manual steering command value $\theta^*_{c,md}$ is calculated by the command value setting unit 52 (see FIG. 3).

In the following description, the steering intervention direction refers to the direction of the manual steering command value $\theta^*_{c,md}$ when the automatic steering command value $\theta^*_{c,ad}$ is used as a reference. The steering intervention direction when $\theta^*_{c,md} \geq 0$ is referred to as left steering intervention direction, and the steering intervention direction when $\theta^*_{c,md} < 0$ is referred to as right steering intervention direction.

The steering direction refers to the direction in which the manual steering command value $\theta^*_{c,md}$ is changing. The steering direction when $d\theta^*_{c,md}/dt \geq 0$ is referred to as left steering direction, and the steering direction when $d\theta^*_{c,md}/dt < 0$ is referred to as right steering direction.

$k_L$, $k_R$, $c_L$, and $c_R$ are variables that are used in the road reaction force characteristic setting process, and are defined as follows.

$k_L$: a variable representing the spring constant k for the left steering intervention direction ($\theta^*_{c,md} \geq 0$)

$k_R$: a variable representing the spring constant k for the right steering intervention direction ($\theta^*_{c,md} < 0$)

$c_L$: a variable representing the viscous damping coefficient c for the left steering direction ($d\theta^*_{c,md}/dt \geq 0$)

$c_R$: a variable representing the viscous damping coefficient c for the right steering direction ($d\theta^*_{c,md}/dt < 0$)

$k_0$, $k_1$, and $k_2$ are candidate values of the spring constant k that are stored in advance in a memory of the motor control ECU 202, and are set to the following values.

$k_0$: a medium candidate spring constant value

$k_1$: a candidate spring constant value smaller than $k_0$
$k_2$: a candidate spring constant value greater than $k_0$
$c_0$, $c_1$, and $c_2$ are candidate values of the viscous damping coefficient c that are stored in advance in the memory of the motor control ECU 202, and are set to the following values.

$c_0$: a medium candidate viscous damping coefficient value

$c_1$: a candidate viscous damping coefficient value smaller than $c_0$
$c_2$: a candidate viscous damping coefficient value greater than $c_0$

The reaction force control information for the left and right directions kLP, kRP, cLP, and cRP is set by the higher-level ECU 201 has the following meaning.

kLP: a parameter indicating whether $k_L$ is "small," "medium," or "large." kLP takes any of the following values: 1 (small), 0 (medium), and 2 (large).

kRP: a parameter indicating whether $k_R$ is "small," "medium," or "large." kRP takes any of the following values: 1 (small), 0 (medium), and 2 (large).

cLP: a parameter indicating whether $c_L$ is "small," "medium," or "large." cLP takes any of the following values: 1 (small), 0 (medium), and 2 (large).

cRP: a parameter indicating whether $c_R$ is "small," "medium," or "large." cRP takes any of the following values: 1 (small), 0 (medium), and 2 (large).

The higher-level ECU 201 determines the values of the reaction force control information for the left and right directions kLP, kRP, cLP, and cRP based on the vehicle environment information, and provides the determined values to the motor control ECU 202.

For example, the higher-level ECU 201 may determine the values of kLP, kRP, cLP, and cRP for the purpose of avoiding danger.

Specifically, when the vehicle is traveling on a road with two or more lanes, the higher-level ECU 201 detects another vehicle around the vehicle and determines the values of kLP, kRP, cLP, and cRP so as to increase the reaction force (both or either one of k and c) in the direction in which the another vehicle is present (direction in which the vehicle approaches the another vehicle).

For example, when there is another vehicle to the right of the vehicle, the higher-level ECU 201 sets kLP and cLP to 0 and sets kRP and cRP to 2. In this case, the higher-level ECU 201 may set kLP, cLP, and cRP to 0 and set kRP to 2. In this case, the higher-level ECU 201 may alternatively set kLP, kRP, and cLP to 0 and set cRP to 2. In this case, the higher-level ECU 201 may alternatively set kLP and cLP to 1 and set kRP and cRP to 0.

When the vehicle is traveling, the higher-level ECU 201 detects an obstacle such as a wall, a pedestrian, a bicycle, etc., and determines the values of kLP, kRP, cLP, and cRP so as to increase the reaction force (both or either one of k and c) in the direction in which there is a high possibility of collision with them (direction in which the vehicle approaches them).

When the vehicle is traveling on a curve, steering toward the outside of the curve has a smaller margin to lane departure than steering toward the inside of the curve. Therefore, the higher-level ECU 201 determines the values of kLP, kRP, cLP, and cRP so as to increase the reaction force (both or either one of k and c) in the direction toward the outside of the curve.

For example, the higher-level ECU 201 may determine the values of kLP, kRP, cLP, and cRP for the purpose of driving instruction.

Specifically, when the vehicle is traveling on a curve on a mountain road etc. in the driver assist mode, the higher-level ECU 201 determines the values of kLP, kRP, cLP, and cRP so as to reduce the reaction force (both or either one of k and c) in such a steering direction that causes a comfortable vehicle behavior with a small lateral acceleration. Alternatively, the higher-level ECU 201 determines the values of kLP, kRP, cLP, and cRP so as to increase the reaction force (both or either one of k and c) in such a steering direction that causes an uncomfortable vehicle behavior.

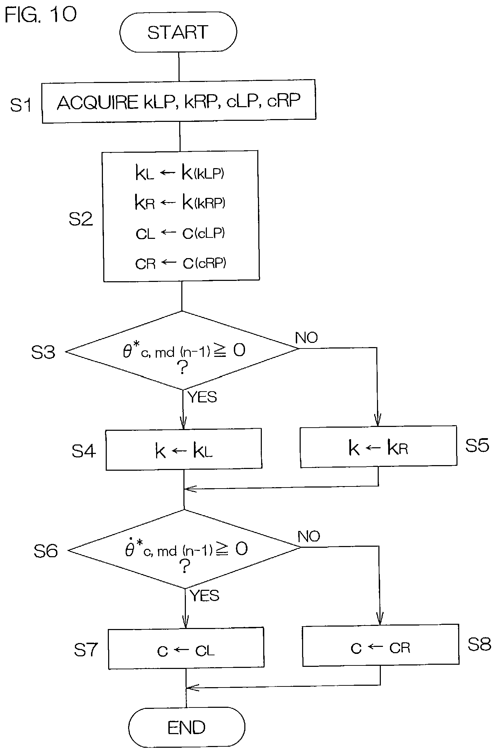

FIG. 10 is a flowchart showing the procedure of the road reaction force characteristic setting process that is performed by the road reaction force characteristic setting unit 43. The road reaction force characteristic setting process shown in FIG. 10 is started every time the driver assist mode is enabled, and is repeatedly performed at every predetermined calculation cycle until the driver assist mode is disabled.

First, the road reaction force characteristic setting unit 43 acquires kLP, kRP, cLP, and cRP provided by the higher-level ECU 201 (step S1).

Next, the road reaction force characteristic setting unit 43 sets $k_L$ to $k_{(kLP)}$ according to kLP, sets $k_R$ to $k_{(kRP)}$ according to kRP, sets $c_L$ to $c_{(cLP)}$ according to cLP, and sets $c_R$ to $c_{(cRP)}$ according to cRP (step S2). For example, when kLP = 0, $k_L$ is set to $k_0$. When kLP = 1, $k_L$ is set to $k_1$. When kLP = 2, $k_L$ is set to $k_2$.

The road reaction force characteristic setting unit 43 then determines whether the previous value of $\theta^*_{c,md}$ ($\theta^*_{c,md(n-1)}$) is equal to or greater than 0 (step S3).

When $\theta^*_{c,md(n-1)} \geq 0$ (step S3: YES), the road reaction force characteristic setting unit 43 sets the spring constant k to be used to calculate the current $\theta^*_{c,md}$ to $k_L$ (= $k_1$, $k_2$, or $k_3$) set in step S2 (step S4). The road reaction force characteristic setting unit 43 then proceeds to step S6.

When it is determined in step S3 that $\theta^*_{c,md(n-1)} < 0$ (step S3: NO), the road reaction force characteristic setting unit 43 sets the spring constant k to be used to calculate the current $\theta^*_{c,md}$ to $k_R$ (= $k_1$, $k_2$, or $k_3$) set in step S2 (step S5). The road reaction force characteristic setting unit 43 then proceeds to step S6.

In step S6, it is determined whether the previous value of $d\theta^*_{c,md}/dt$, $(d\theta^*_{c,md}/dt)_{(n-1)}$, is equal to or greater than 0.

When $(d\theta^*_{c,md}/dt)_{(n-1)} \geq 0$ (step S6: YES), the road reaction force characteristic setting unit 43 sets the viscous damping coefficient c to be used to calculate the current $\theta^*_{c,md}$ to $c_L$ (= $c_1$, $c_2$, or $c_3$) set in step S2 (step S7). The road reaction force characteristic setting unit 43 then ends the process in the current calculation cycle.

When it is determined in step S6 that $(d\theta^*_{c,md}/dt)_{(n-1)} < 0$ (step S6: NO), the road reaction force characteristic setting unit 43 sets the viscous damping coefficient c to be used to calculate the current $\theta^*_{c,md}$ to $c_R$ (= $c_1$, $c_2$, or $c_3$) set in step S2 (step S8). The road reaction force characteristic setting unit 43 then ends the process in the current calculation cycle.

When changing the spring constant k to be used to calculate the current $\theta^*_{c,md}$ to a new value (target value $k_{target}$), the spring constant k may be switched to the target value $k_{target}$ by gradually changing the spring constant k from the value k before change to the target value $k_{target}$ over a period of about 0.5 seconds to one second. In this case, the value k before change is switched to the target value $k_{target}$ over a plurality of calculation cycles. Similarly, when changing the viscous damping coefficient c to be used to calculate the current $\theta^*_{c,md}$ to a new value (target value $c_{target}$), the viscous damping coefficient c may be switched to the target value $c_{target}$ by gradually changing the viscous damping coefficient c from the value c before change to the target value $c_{target}$ over a period of about 0.5 seconds to one second. In this case, the value c before change is switched to the target value $c_{target}$ over a plurality of calculation cycles.

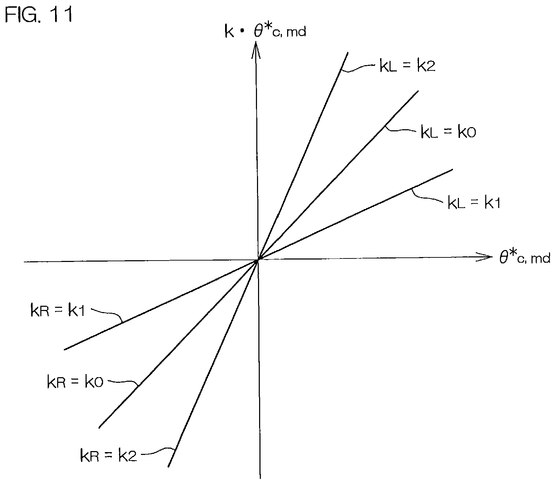

FIG. 11 is a graph showing an example of characteristics of $k \cdot \theta^*_{c,md}$ with respect to $\theta^*_{c,md}$ when k is set to $k_L$ and $k_L$ is set to $k_1$, $k_2$, or $k_0$, and an example of characteristics of $k \cdot \theta^*_{c,md}$ with respect to $\theta^*_{c,md}$ when k is set to $k_R$ and $k_R$ is set to $k_1$, $k_2$, or $k_0$.

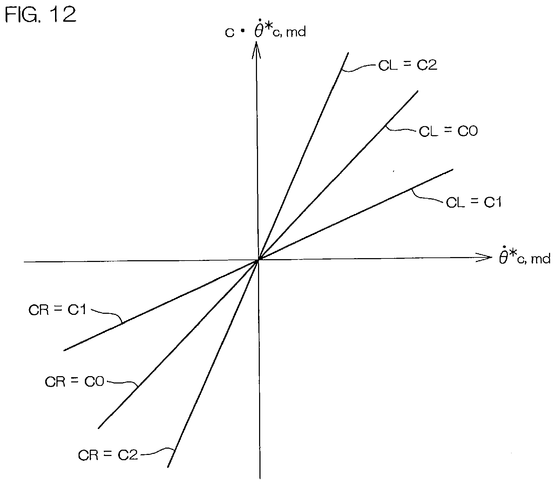

FIG. 12 is a graph showing an example of characteristics of $c \cdot d\theta^*_{c,md}/dt$ with respect to $d\theta_{md}/dt$ when c is set to $c_L$ and $c_L$ is set to $c_1$, $c_2$, or $c_0$, and an example of characteristics of $c \cdot d\theta^*_{c,md}/dt$ with respect to $d\theta_{md}/dt$ when c is set to $c_R$ and $c_R$ is set to $c_1$, $c_2$, or $c_0$.

When the driving mode is the normal mode, the road reaction force characteristic setting unit 43 sets the spring constant k and the viscous damping coefficient c to $k_0$ and $c_0$, respectively. That is, in the normal mode, the spring constant k and the viscous damping coefficient c are not changed.

In the driver assist mode, the road reaction force characteristic setting unit 43 may change both the spring constant k and the viscous damping coefficient c, or may change either the spring constant k or the viscous damping coefficient c. In other words, the road reaction force characteristic setting unit 43 can change either or both of the spring constant k and the viscous damping coefficient c in the driver assist mode.

Although the three types of candidate values, $k_0$, $k_1$, and $k_2$, are prepared as the candidate values of $k_L$ and $k_R$ in the above embodiment, two types of candidate values or four types of candidate values may be prepared as the candidate values of $k_L$ and $k_R$. Similarly, although the three types of candidate values, $c_0$, $c_1$, and $c_2$, are prepared as the candidate values of $c_L$ and $c_R$, two types of candidate values or four types of candidate values may be prepared as the candidate values of $c_L$ and $c_R$. The types of values that are taken by the reaction force control information for the left and right directions kLP, kRP, cLP, and cRP also change according to the types of candidate values of $k_L$, $k_R$, $c_L$, and $c_R$.

In the above embodiment, the higher-level ECU 201 determines the values of the reaction force control information for the left and right directions kLP, kRP, cLP, and cRP based on the vehicle environment information, and provides the determined values to the motor control ECU 202. In the driver assist mode, the road reaction force characteristic setting unit 43 can change the value of either or both of the spring constant k and the viscous damping coefficient c, based on the reaction force control information for the left and right directions kLP, kRP, cLP, and cRP provided by the higher-level ECU 201 and both or either one of the steering intervention direction and the steering direction. It is therefore possible to reduce the risk of an accident etc. due to a driver's wrong maneuver etc. when the driver intervenes in steering during driver assistance.

The above embodiment illustrates an example in which the present invention is applied to motor control for a column type EPS. However, the present invention is also applicable to motor control for an EPS other than the column type.

Although the embodiment of the present invention is described in detail above, this is merely a specific example used to clarify the technical content of the present invention. The present invention should not be construed as being limited to the specific example, and the scope of the present invention is limited only by the appended claims.

Description of the Reference Numerals

1 ... electric power steering system, 3 ... steered wheel, 4 ... steering operation mechanism, 18 ... electric motor, 43 ... road reaction force characteristic setting unit, 44 ... manual steering command value generation unit, 45 ... integrated angle command value calculation unit, 46 ... angle control unit, 47 ... torque control unit, 51 ... assist torque command value setting unit, 52 ... command value setting unit, 201 ... higher-level ECU, 202 ... motor control ECU

**Claims**

1.  A motor control device comprising:

    a manual steering command value generation unit that generates a manual steering command value;
    an integrated angle command value calculation unit that calculates an integrated angle command value by adding the manual steering command value to an automatic steering command value provided in a driver assist mode; and
    a control unit that performs angle control on an electric motor for steering angle control based on the integrated angle command value, wherein
    the manual steering command value generation unit is configured to generate the manual steering command value based on an equation of motion including road reaction force characteristic coefficients, the motor control device further including a road reaction force characteristic changing unit that changes a value of at least one of the road reaction force characteristic coefficients included in the equation of motion, based on vehicle environment information that is information on an environment in which a vehicle travels.

2.  The motor control device according to claim 1, wherein:

    the road reaction force characteristic coefficients include a spring constant and a viscous damping coefficient; and
    the road reaction force characteristic changing unit is configured to change a value of either or both of the spring constant and the viscous damping coefficient according to a steering intervention direction or a steering direction based on the vehicle environment information.

3.  The motor control device according to claim 1 or 2, wherein the road reaction force characteristic changing unit is configured to increase the value of at least one of the road reaction force characteristic coefficients included in the equation of motion in such a steering intervention direction or a steering direction that the vehicle approaches another vehicle or an obstacle.

4.  The motor control device according to claim 1 or 2, wherein the road reaction force characteristic changing unit is configured to reduce the value of at least one of the road reaction force characteristic coefficients included in the equation of motion in such a steering intervention direction or a steering direction that the vehicle moves away from another vehicle or an obstacle.

**Amended claims under Art. 19.1 PCT**

1.  (Amended) A motor control device comprising:

    a manual steering command value generation unit that generates a manual steering command value;
    an integrated angle command value calculation unit that calculates an integrated angle command value by adding the manual steering command value to an automatic steering command value provided in a driver assist mode; and
    a control unit that performs angle control on an electric motor for steering angle control based on the integrated angle command value, wherein
    the manual steering command value generation unit is configured to generate the manual steering command value based on an equation of motion including road reaction force characteristic coefficients, the motor control device further including a road reaction force characteristic changing unit that changes a value of at least one of the road reaction force characteristic coefficients included in the equation of motion, based on vehicle environment information that is information on an environment in which a vehicle travels, wherein

the road reaction force characteristic coefficients include a spring constant and a viscous damping coefficient, and the road reaction force characteristic changing unit is configured to change a value of either or both of the spring constant and the viscous damping coefficient according to a steering intervention direction or a steering direction based on the vehicle environment information.

2. (Amended) The motor control device according to claim 1, wherein the road reaction force characteristic changing unit is configured to increase the value of at least one of the road reaction force characteristic coefficients included in the equation of motion in such a steering intervention direction or a steering direction that the vehicle approaches another vehicle or an obstacle.

3. (Amended) The motor control device according to claim 1, wherein the road reaction force characteristic changing unit is configured to reduce the value of at least one of the road reaction force characteristic coefficients included in the equation of motion in such a steering intervention direction or a steering direction that the vehicle moves away from another vehicle or an obstacle.

4. (Deleted)

FIG. 1

EP 4 470 877 A1

FIG. 2

FIG. 3

MANUAL STEERING COMMAND VALUE GENERATION UNIT — 44

COMMAND VALUE SETTING UNIT (REFERENCE ESP MODEL) — 52

$T_{tb}$

$V$

ASSIST TORQUE COMMAND VALUE SETTING UNIT — 51

$T^*_{m, md}$

$\theta^*_{c, md}$

k, c

$S_{mode}$

kLP, kRP, cLP, cRP

ROAD REACTION FORCE CHARACTERISTIC SETTING UNIT — 43

EP 4 470 877 A1

FIG. 4

ASSIST TORQUE COMMAND VALUE
( $T^*_{m, md}$ )

⟨RIGHT⟩ ⟵  ⟶ ⟨LEFT⟩

O

STEERING
TORQUE
( $T_{tb}$ )

FIG. 5

$T_{tb}$    $N \cdot T^*_{m, md}$

Lower column
$J_c$ , $\theta_c$ , $\ddot{\theta}_c$

c    k

FIG. 6

ANGLE CONTROL UNIT

46

63A  63B  63

$\ddot{\theta}^*{}_{c,\,intf}$  J  $T_{ff,\,int}$

61  $\theta^*{}_{c,\,intf}$

$\theta^*{}_{c,\,int}$  LPF

62A  62B  62

+  −  PD  $T_{fb,\,int}$

+  +  65  $T^*{}_{c,\,int}$  +  −  66  67  $\dfrac{1}{N}$  $T^*{}_{m,\,int}$

64

DISTURBANCE TORQUE ESTIMATION UNIT (DISTURBANCE OBSERVER)

$\hat{T}_{lc,\,int}$

68

$N \cdot T^*{}_{m,\,int}$  N

$\theta_{c,\,int}$

FIG. 7

$$102$$
$$\overbrace{21 \qquad 9}$$

$T_{tb}$

$T_{rl}$

10

2

$N \cdot T^{*}_{m,\,int} + T_{f}$

20

18

101

FIG. 8

DISTURBANCE TORQUE
ESTIMATION UNIT

86

$A_e$

89

81

85

$\widehat{\theta}_{c,\,int}$

$N \cdot T^*_{m,\,int}$

$u_1$

$B_e$

$+$

$\dot{\widehat{x}}_e$

$\dfrac{1}{s}$

$\widehat{x}_e$

$\dot{\widehat{\theta}}_{c,\,int}$

87

88

$\widehat{T}_{lc}$

84

L

82

83

$+$

$C_e$

$y$

$\theta_{c,\,int}$

64

EP 4 470 877 A1

FIG. 9

47

TORQUE CONTROL UNIT

91

MOTOR CURRENT COMMAND VALUE CALCULATION UNIT

$T^*_{m,int}$

$I^*_{m,int}$

+ / −

92

93

PI CONTROL UNIT

94

PWM CONTROL UNIT

DRIVE CIRCUIT

31

$I_{m,int}$

32

CURRENT DETECTION CIRCUIT

FIG. 10

```
        ┌─────────┐
        │  START  │
        └─────────┘
             │
S1 ┌──────────────────────────────┐
   │  ACQUIRE kLP, kRP, cLP, cRP   │
   └──────────────────────────────┘
             │
   ┌──────────────────────────────┐
   │        kL ← k(kLP)            │
   │        kR ← k(kRP)            │
S2 │        CL ← C(cLP)            │
   │        CR ← C(cRP)            │
   └──────────────────────────────┘
             │
S3        ╱──────────────╲   NO
     ╱ θ*c, md (n-1) ≧ 0 ╲────────┐
     ╲        ?          ╱        │
        ╲──────────────╱         │
           │ YES                  │
           ▼                      ▼
S4 ┌──────────────┐      ┌──────────────┐ S5
   │   k ← kL     │      │   k ← kR     │
   └──────────────┘      └──────────────┘
           │                      │
           ◄──────────────────────┘
           │
S6        ╱──────────────╲   NO
     ╱ θ̇*c, md (n-1) ≧ 0 ╲───────┐
     ╲        ?          ╱        │
        ╲──────────────╱         │
           │ YES                  │
           ▼                      ▼
S7 ┌──────────────┐      ┌──────────────┐ S8
   │   c ← CL     │      │   c ← CR     │
   └──────────────┘      └──────────────┘
           │                      │
           ◄──────────────────────┘
           │
        ┌─────────┐
        │   END   │
        └─────────┘
```

S3: $\theta^{*}{}_{c,\,md\,(n-1)} \geqq 0$ ?

S6: $\dot{\theta}^{*}{}_{c,\,md\,(n-1)} \geqq 0$ ?

FIG. 11

FIG. 12

## INTERNATIONAL SEARCH REPORT

| International application No. |
| --- |
| **PCT/JP2022/002733** |

### A. CLASSIFICATION OF SUBJECT MATTER

*B62D 6/00*(2006.01)i; *B62D 5/04*(2006.01)i
FI: B62D6/00; B62D5/04

According to International Patent Classification (IPC) or to both national classification and IPC

### B. FIELDS SEARCHED

Minimum documentation searched (classification system followed by classification symbols)

B62D6/00; B62D5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-194059 A (JTEKT CORPORATION) 07 November 2019 (2019-11-07) paragraphs [0029]-[0034], [0067]-[0071], [0095]-[0096], fig. 3-5, 12-13 | 1 |
| A | | 2-4 |
| A | JP 2021-000950 A (JTEKT CORPORATION) 07 January 2021 (2021-01-07) paragraphs [0033]-[0087], fig. 4-16 | 1-4 |
| A | JP 2020-168918 A (JTEKT CORPORATION) 15 October 2020 (2020-10-15) paragraphs [0036]-[0040], fig. 3-5 | 1-4 |
| A | JP 2020-132008 A (JTEKT CORPORATION) 31 August 2020 (2020-08-31) paragraphs [0028]-[0031], fig. 3-5 | 1-4 |
| A | JP 2020-049962 A (JTEKT CORPORATION) 02 April 2020 (2020-04-02) paragraphs [0027]-[0035], fig. 3-5 | 1-4 |
| A | JP 2020-019346 A (JTEKT CORPORATION) 06 February 2020 (2020-02-06) paragraphs [0025]-[0032], [0063]-[0092], fig. 3-5 | 1-4 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 March 2022** | **12 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/002733**

**C.     DOCUMENTS CONSIDERED TO BE RELEVANT**

| Category* | Citation of document, with indication, where appropriate, of the relevant passages | Relevant to claim No. |
|---|---|---|
| A | WO 2019/225289 A1 (JTEKT CORPORATION) 28 November 2019 (2019-11-28) paragraphs [0042]-[0044], [0050]-[0055], fig. 2-4 | 1-4 |
| A | JP 2019-182393 A (JTEKT CORPORATION) 24 October 2019 (2019-10-24) paragraphs [0094]-[0099], [0101]-[0103], [0107]-[0111], fig. 13-16, 18 | 1-4 |
| A | JP 2019-014468 A (JTEKT CORPORATION) 31 January 2019 (2019-01-31) paragraphs [0087]-[0093], [0095]-[0098], [0102]-[0107], fig. 14-17, 19 | 1-4 |
| A | US 2019/0031231 A1 (STEERING SOLUTIONS IP HOLDING CORPORATION) 31 January 2019 (2019-01-31) paragraphs [0018]-[0062], fig. 1-7 | 1-4 |

Form PCT/ISA/210 (second sheet) (January 2015)

## INTERNATIONAL SEARCH REPORT
### Information on patent family members

International application No.

**PCT/JP2022/002733**

| Patent document cited in search report | | | Publication date (day/month/year) | Patent family member(s) | | | Publication date (day/month/year) |
|---|---|---|---|---|---|---|---|
| JP | 2019-194059 | A | 07 November 2019 | EP | 3572300 | A1 | |
| | | | | CN | 110406589 | A | |
| | | | | US | 2019/0329818 | A1 | |
| | | | | paragraphs [0043]-[0048], [0082]-[0087], [0111]-[0112], fig. 3-5, 12-13 | | | |
| JP | 2021-000950 | A | 07 January 2021 | EP | 3756976 | A1 | |
| | | | | CN | 112124423 | A | |
| | | | | US | 2020/0398893 | A1 | |
| | | | | paragraphs [0065]-[0130], fig. 4-16D | | | |
| JP | 2020-168918 | A | 15 October 2020 | EP | 3722176 | A1 | |
| | | | | CN | 111791944 | A | |
| | | | | US | 2020/0317261 | A1 | |
| | | | | paragraphs [0045]-[0050], fig. 3-5 | | | |
| JP | 2020-132008 | A | 31 August 2020 | EP | 3699062 | A1 | |
| | | | | CN | 111661148 | A | |
| | | | | US | 2020/0269906 | A1 | |
| | | | | paragraphs [0038]-[0040], fig. 3-5 | | | |
| JP | 2020-049962 | A | 02 April 2020 | EP | 3626580 | A1 | |
| | | | | CN | 110937015 | A | |
| | | | | US | 2020/0094870 | A1 | |
| | | | | paragraphs [0044]-[0053], fig. 3-5 | | | |
| JP | 2020-019346 | A | 06 February 2020 | EP | 3608203 | A1 | |
| | | | | CN | 110775151 | A | |
| | | | | US | 2020/0039576 | A1 | |
| | | | | paragraphs [0034]-[0042], [0074]-[0112], fig. 3-5 | | | |
| WO | 2019/225289 | A1 | 28 November 2019 | CN | 112154092 | A | |
| | | | | EP | 3798099 | A1 | |
| | | | | paragraphs [0042]-[0044], [0050]-[0055], fig. 2-4 | | | |
| JP | 2019-182393 | A | 24 October 2019 | EP | 3569476 | A1 | |
| | | | | CN | 110386188 | A | |
| | | | | CN | 110386188 | A1 | |
| | | | | paragraphs [0127]-[0135], [0137]-[0139], [0143]-[0148], fig. 13-16, 18 | | | |
| | | | | EP | 3569476 | A | |
| JP | 2019-014468 | A | 31 January 2019 | EP | 3424799 | A1 | |
| | | | | CN | 109204449 | A | |
| | | | | US | 2019/0009816 | A1 | |
| | | | | paragraphs [0150]-[0158], [0160]-[0163], [0167]-[0172], fig. 14-17, 19 | | | |
| US | 2019/0031231 | A1 | 31 January 2019 | DE | 102018117975 | A1 | |
| | | | | CN | 109305215 | A | |

Form PCT/ISA/210 (patent family annex) (January 2015)

**EP 4 470 877 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019194059 A